# EUROPÄISCHE PATENTSCHRIFT

(11) **EP 4 132 984 B1**
(45) Veröffentlichungstag und Bekanntmachung des Hinweises auf die Patenterteilung: **13.12.2023**
(21) Anmeldenummer: 21715921.9
(22) Anmeldetag: 06.04.2021
(51) Int. Cl.: C08G 18/00, C08G 18/10, C08G 18/24, C08G 18/28, C08G 18/32, C08G 18/48, C08G 18/76

(54) **MIT AUS CASHEWNUSS-SCHALENÖL ERHÄLTLICHEN PHENOLEN BLOCKIERTE, NIEDRIGVISKOSE ISOCYANAT-PREPOLYMERE, VERFAHREN ZUR DEREN HERSTELLUNG UND DEREN VERWENDUNG**
LOW VISCOSITY ISOCYANATE PREPOLYMERS BLOCKED WITH PHENOLS OBTAINABLE FROM CASHEW NUT SHELL OIL, METHOD FOR THEIR PREPARATION AND THEIR USE
PRÉPOLYMÈRES D'ISOCYANATE À FAIBLE VISCOSITÉ BLOQUÉS AYANT DES PHÉNOLS OBTENUS À PARTIR DE L'HUILE DE NOIX DE CAJOU, LEUR PROCÉDÉ DE FABRICATION ET LEUR UTILISATION

(30) Priorität: 08.04.2020 EP 20168769
(43) Veröffentlichungstag der Anmeldung: 15.02.2023
(73) Patentinhaber: Covestro Deutschland AG, 51373 Leverkusen (DE)
(72) Erfinder: ZORN, Anna-Marie, 76275 Ettlingen (DE); STOYE, Claudine, 51067 Köln (DE); DURGUT, Erkan, 44867 Bochum (DE); WUEHRER, Karl H., 51143 Köln (DE); SCHUCHT, Thomas, 51515 Kürten (DE)
(74) Vertreter: Levpat
(86) Internationale Anmeldenummer: PCT/EP2021/058835
(87) Internationale Veröffentlichungsnummer: WO 2021/204741

(56) Entgegenhaltungen:
- US-A- 5 510 432
- US-A1- 2016 264 714
- US-A1- 2017 022 317
- Yun Mi Kim ET AL: "An Eco-friendly Isocyanate Blocking Agent Cardanol", , 1. Februar 2019 (2019-02-01), Seiten 1-18, XP055725748, Gefunden im Internet: URL:https://www.coatingsworld.com/issues/2 019-02-01/view_technical-papers/cardanol-- -an-eco-friendly-isocyanate-blocking-agent / [gefunden am 2020-08-28]

## Beschreibung

Die vorliegende Erfindung betrifft neue, lösemittelfreie, bei Raumtemperatur härtende, blockierte Isocyanat-Prepolymere und ein Verfahren zu deren Herstellung. Außerdem betrifft die vorliegende Erfindung die Verwendung dieser blockierten Isocyanat-Prepolymere zur Herstellung von lösemittelfreien Reaktivsystemen und deren Verwendung wiederum zur Herstellung von bei Raumtemperatur härtenden Klebstoffen, Dichtungsmassen, Vergussmassen, Formteilen oder Beschichtungen.

Durch die Kombination von Polyurethanen lässt sich eine gute und dauerhafte Elastifizierung von Epoxidharzen erreichen. In der DE 23 38 256 A1 z.B. wurden hochmolekulare, aminterminierte Polyetherurethanharnstoffe durch Reaktion von freien Isocyanatgruppen enthaltenden Prepolymeren mit Aminen in stark verdünnten Lösungen hergestellt und anschließend mit Epoxidharzen ausgehärtet. Der Einsatz der hierzu erforderlichen Lösemittel ist in der Praxis sowohl vom technischen als auch physiologischen Standpunkt jedoch nachteilig. Andererseits ist die Viskosität der hergestellten, lösemittelfreien Reaktionsprodukte, für die Anwendungen in der Praxis zu hoch.

Ein Verfahren zur Herstellung von elastifizierten Formteilen und Flächengebilden wird in der DE 24 18 041 A1 beschrieben. Dabei wird ein Epoxid mit einer Aminverbindungen umgesetzt, die durch Hydrolyse prepolymerer Ketimine bzw. Enamine erhalten werden. Mit diesem Verfahren sind chemikalienfeste, gut haftende Duromere mit verbesserten Eigenschaften herstellbar. Nachteilig an dem beschriebenen Verfahren ist der hohe verfahrenstechnische Aufwand.

Die DE 21 52 606 A1 beschreibt Reaktivsysteme auf Basis Alkylphenol-blockierter Polyisocyanate und Polyamine, die gegebenenfalls auch in Kombination mit Epoxidharzen ausgehärtet werden können. Auch diese Reaktivsysteme sind mit einigen anwendungstechnischen Nachteilen behaftet, z.B. haben die Reaktivsysteme eine relativ hohe Viskosität und das freiwerdende Blockierungsmittel ist von vergleichsweise niedrigem Molekulargewicht, was dazu führt, dass es mit der Zeit aus der Beschichtung auswandert und die Haftung der Beschichtung zum Substrat nicht mehr ausreichend ist.

Um eine gezielte Reaktion von Polyisocyanat-Prepolymeren mit überschüssigen Mengen Diamin zu ermöglichen, wurde daher vielfach vorgeschlagen, die Polyisocyanate in blockierter Form einzusetzen, so z.B. beschrieben in DE 31 51 592 A1, EP 293 110 A2, US 5,510,432 oder EP 082 983 A1. Dort werden als bevorzugte Blockierungsmittel Phenole oder substituierte Phenole eingesetzt. Nach erfolgter Reaktion mit den Polyaminen können diese Substanzen aufgrund ihres hohen Siedepunktes aber nicht oder nur unvollständig destillativ aus dem Reaktionsgemisch entfernt werden. Das
Verbleiben der gegebenenfalls substituierten Phenole in der Abmischung oder in der Kunststoffmasse führt aber zu den bereits beschriebenen Nachteilen.

In der EP 0 457 089 A2 werden dagegen sekundäre Amine mit vorzugsweise niedrigem Siedepunkt als Blockierungsmittel eingesetzt. Verbleiben diese Amine nach der Deblockierung in der Reaktionsmischung, kommt es leicht zu einer Geruchsbelästigung. Nach dem Einsatz in Epoxid-Systemen kann das sekundäre Amin zwar prinzipiell in das System eingebaut werden, diese Reaktion verläuft jedoch gerade bei tiefen Temperaturen (z.B. Raumtemperatur) relativ langsam, wodurch ein Teil der Amine die Beschichtung verlassen wird. In einer besonders bevorzugten Anwendung wird das aminische Blockierungsmittel nach der Deblockierung aus dem Reaktionsgemisch abdestilliert. Diese Verfahrensweise führt zwar zu Produkten ohne Geruchsbelästigung, ist aber sehr aufwendig und somit teuer.

Aus der US 6,060,574 A sind darüber hinaus reaktive Zusammensetzungen bekannt, welche aus reversibel blockierten organischen Polyisocyanaten und mindestens einem Polyamin mit mindestens zwei primären Aminogruppen bestehen und gegebenenfalls zusätzlich noch eine Oxirangruppenhaltige Verbindung enthalten. Als Blockierungsmittel für die organischen Polyisocyanate werden Kohlenwasserstoff-Harze mit phenolischen OH-Gruppen eingesetzt. Derart blockierte Polyisocyanate zeichnen sich durch eine deutlich reduzierte Reaktivität gegenüber Polyaminen aus, verglichen mit Alkylphenol-blockierten Polyisocyanaten. Als organische Polyisocyanate können Prepolymere eingesetzt werden, die durch Umsetzung von Polyhydroxy-Verbindungen mit einem Überschuss von Di- oder Polyisocyanaten erhalten werden. Als Polyhydroxy-Verbindungen können z.B. Polyetherpolyole eingesetzt werden, die durch Alkoxylierung geeigneter Starter-Moleküle (z.B. monomere Polyole) zugänglich sind.

WO 2006/037453 A2 beschreibt ein Verfahren zur Herstellung von blockierten Polyisocyanaten, wobei mind. 50 mol-% der NCO-Gruppen mit einem sterisch gehinderten Phenol blockiert wurden. Ein analoges Verfahren beschreibt EP 1 650 243 A1.

EP 1 204 691 B1 beschreibt raumtemperaturhärtenden, lösemittelfreien Reaktivsystemen auf Basis von blockierten Isocyanaten und organischen Aminen.

EP 1 578 836 B1 beschreibt ein Verfahren zur Herstellung von Polyurethan-Prepolymeren mit niedriger Viskosität für raumtemperaturhärtende Reaktivsysteme.

WO 2015/153399 A1 beschreibt ein von natürlichem Öl abgeleitetes blockiertes Prepolymer, hergestellt aus einem Isocyanat-terminierten Prepolymer und einem von einem natürlichen Öl abgeleiteten Blockierungsmittel, wie z.B. Cashew-Nussschalen-Flüssigkeit mit einem Gehalt an 94% Cardanol. Bei der Verarbeitung des blockierten Prepolymeren ist die hohe Viskosität von Nachteil. Diese liegt im Bereich von 50,000 Pas bis 300,000 Pas. Ein analoges Verfahren beschreibt WO 2017/044402 A1.

Alle im Stand der Technik beschriebenen, reversibel, blockierten Isocyanat-Prepolymere, hergestellt durch die Umsetzung eines Isocyanatgruppen-haltigen Isocyanat-Prepolymers mit einem Blockierungsmittel weisen bislang durch intermolekulare Wasserstoffbrückenbindung der Urethangruppe eine hohe Viskosität auf, was für die Verarbeitung entsprechender Reaktivsysteme mit Polyaminen und gegebenenfalls Epoxiden von großem Nachteil ist. Eine Sprühapplikation ist auf Grund der hohen Viskosität solcher Systeme meist nicht möglich.

Die Aufgabe der vorliegenden Erfindung bestand daher in der Herstellung von neuen blockierten Isocyanat-Prepolymeren, die sich auf Grund niedriger Viskosität problemlos zu entsprechenden Reaktivsystemen mit Polyaminen und gegebenenfalls Epoxiden verarbeiten lassen, die lösemittelfrei und raumtemperaturhärtend ist.

Die neuen blockierten Isocyanat-Prepolymere sollen Verwendung finden bei der Herstellung von Klebstoffen, Dichtungsmassen, Vergussmassen, Kompositen (Faserverbundwerkstoffe), Formteilen und Beschichtungen. Mögliche Anwendungsgebiete sind dabei insbesondere Korrosionsschutzbeschichtungen im Stahlwasserbau, Schiffsbau (z.B. Ballasttanks) und für Pipelines sowie Fußbodenbeschichtungen.

Die aus diesen Reaktivsystemen hergestellten Beschichtungen sollten eine gute Haftung, insbesondere Nasshaftung, Chemikalienbeständigkeit, Schlag- und Stoßfestigkeit bei gleichzeitiger Flexibilität und Elastizität aufweisen.

Es wurde überraschenderweise gefunden, dass insbesondere Isocyanat-Prepolymere, die mit Mischungen phenolischer Blockierungsmittel, gemäß nachstehender Beschreibung, blockiert sind, eine erheblich niedrigere Viskosität als entsprechend dem Stand der Technik blockierte Isocyanat-Prepolymere aufweisen und sich somit besonders gut zu Reaktivsystemen verarbeiten lassen.

Gegenstand der vorliegenden Erfindung sind Blockierungsmittel enthaltend oder bestehend aus Cardanol und Cardol in einem Gewichtsverhältnis von 92 : 8 bis 100 : 0,
sowie mindestens eine/r Verbindung der allgemeinen Formel 1 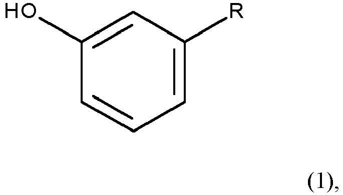
   in welcher R für C₁₇H₃₃₋ₙ mit n = 0, 2 oder 4 steht,
   wobei die Verbindungen der Formel 1 in einer Gesamtmenge von 0,1 bis 3,0 Gew.-
   %, bezogen auf das Gesamtgewicht des Blockierungsmittels, vorliegen, und
gegebenenfalls mindestens eine/r Verbindung der allgemeinen Formel 2 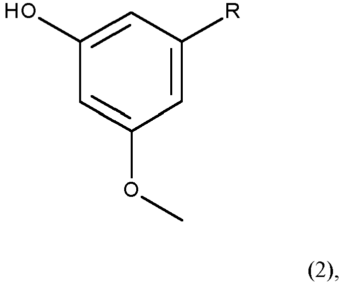
   in welchen R für C₁₅H₃₁₋ₙ, mit n = 4 oder 6 steht,
   wobei die Verbindungen der Formel 2, falls vorhanden, in einer Gesamtmenge von maximal 1,8 Gew.-%, bezogen auf das Gesamtgewicht des Blockierungsmittels, vorliegen.

Bevorzugt beträgt der Schwefelgehalt des Blockierungsmittels weniger als 15 mg/kg, besonders bevorzugt weniger als 12 mg/kg.

Gegenstand der vorliegenden Erfindung ist auch ein Verfahren zur Herstellung von blockierten Isocyanat-Prepolymeren, umfassend die oder bestehend aus der Umsetzung von
mindestens einem Isocyanat-Gruppen tragenden Prepolymeren, erhältlich aus der Umsetzung einer Zusammensetzung, umfassend oder bestehend aus
   A. mindestens ein/einem aliphatisches/en, cycloaliphatisches/en, araliphatisches/en und/oder aromatisches/en Di- und/oder Polyisocyanat und
   B. mindestens eine/einer Polyhydroxyverbindung
mit einem Blockierungsmittel C, entsprechend obiger Beschreibung.

Ebenfalls Gegenstand der vorliegenden Erfindung sind blockierte Isocyanat-Prepolymere erhältlich nach dem oben beschriebenen Verfahren.

**Ausgangsverbindungen A** für das erfindungsgemäße Verfahren sind beliebige Diisocyanate und/oder Polyisocyanate mit aliphatisch, cycloaliphatisch, araliphatisch und/oder aromatisch gebundenen Isocyanatgruppen.

Geeignete **Diisocyanate A** sind beliebige, auf verschiedene Weise, beispielsweise durch Phosgenierung in der Flüssig- oder Gasphase oder auf phosgenfreien Weg, wie z. B. durch thermische Urethanspaltung, zugängliche Diisocyanate. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diiso-cyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin (NDI), Norbornandiisocyanat (NBDI)oder beliebige Gemische solcher Diisocyanate. Bevorzugt geeignet sind aromatische Polyisocyanate wie z.B. 1,5-Naphthalendiisocyanat (NDI), Diisocyanatodiphenylmethan (MDI), Poly(methylenphenylisocyanat) (pMDI, polymeres MDI, rohes MDI), Diisocyanatomethylbenzol (2,4- und 2,6-Toluylendiisocyanat, TDI), insbesondere das 2,4- und das 2,6-Isomere und technische Gemische der beiden Isomeren. Ein ganz besonders geeignetes aromatisches Diisocyanat ist 2,4-Toluylendiisocyanat sowie dessen technisches Gemisch aus 70 bis 90 % 2,4-Toluylendiisocyanat und 30 bis 10 % 2,6-Toluylendiisocyanat.

Geeignete **Polyisocyanate A** sind beliebige, durch Modifizierung einfacher aliphatischer, cycloaliphatischer, araliphatischer und/oder aromatischer Diisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind oder um beliebige Gemische solcher Polyisocyanate.

Bei der Herstellung dieser Polyisocyate schließt sich an die eigentliche Modifizierungsreaktion in der Regel ein weiterer Verfahrenschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren als Ausgangskomponente A Polyisocyanate der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen.

Besonders bevorzugte Polyisocyanate A für das erfindungsgemäße Verfahren sind solche der genannten Art mit ausschließlich aromatisch gebundenen Isocyanatgruppen.

Ganz besonders bevorzugte Polyisocyanate A sind solche auf Basis von 2,4- und 2,6-Diisocyanatotoluol (TDI), sowie dessen technisches Gemisch aus 70% bis 90% 2,4-Toluylendiisocyanat und 30% bis 10% 2,6-Toluyendiisocyanat.

Bei den beim erfindungsgemäßen Verfahren eingesetzten **Polyhydroxyverbindungen B** handelt es sich um beliebige Polyole, beispielsweise die aus der Polyurethanchemie bekannten polymeren Polyetherpolyole, Polyesterpolyole, Polycarbonatpolyole, Polyurethanpolyole und/oder Polyacrylatpolyole. Bevorzugt werden Polyetherpolyole oder Mischungen der genannten polymeren Polyole, enthaltend mindestens ein Polyetherpolyol, eingesetzt. Besonders bevorzugt werden ausschließlich Polyetherpolyole eingesetzt.

Diese haben in der Regel eine mittlere Funktionalität von 1,8 bis 6,0, bevorzugt 1,8 bis 4,0, besonders bevorzugt von 1,9 bis 2,2. Das zahlenmittlere Molekulargewicht (nach DIN 55672-I:2016-03 bestimmt) dieser Polyole beträgt in der Regel von 1000 bis 10000 g/mol, vorzugsweise von 1000 bis 4000 g/mol, besonders bevorzugt von 1000 bis 2000 g/mol. Es können auch beliebige Gemische solcher Polyole eingesetzt werden.

Geeignete Polyhydroxyverbindungen B für das erfindungsgemäße Verfahren sind Polyetherpolyole, beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Als Polyetherpolyole B besonders bevorzugte Polyetherpolyole sind Anlagerungsproduckte von Ethylenoxid und/oder Propylenoxid an 1,2-Propandiol, 1,3-Propantriol, Glycerin, Trimethylolpropan, Ethylendiamin und/oder Pentaerythrit oder die beispielsweise gemäß Angew. Chem. 72, 927 (1960) durch Polymerisation von Tetrahydrofuran erhältlichen Poyltetramethylenetherglykole des oben genannten Molekulargewichtsbereichs. Ganz besonders bevorzugt sind Anlagerungsprodukte von Ethylenoxid und/oder Propylenoxid an 1,2-Propandiol (Propylenglykol), wobei das Polyetherpolyol 80 Gew.-% Propylenglykol, mehr bevorzugt 90 Gew.-% Propylenglykol, am meisten bevorzugt 100 Gew.-% Propylenglykol enthält.

In **Komponente C** werden geeignete Blockierungsmittel mit phenolischen Verbindungen eingesetzt.

Das eingesetzte Blockierungsmittel C enthält Cardanol mit der allgemeinen Formel (3) 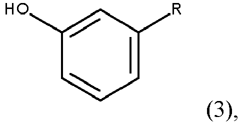
in welcher R für C₁₅H₃₁₋ₙmit n = 0, 2, 4 und 6 steht,
und Cardol mit der allgemeinen Formel (4) 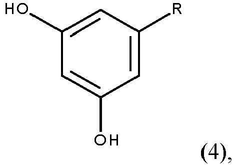 wobei R für C₁sH₃₁₋ₙmit n = 0, 2, 4 und 6 steht.

Das Cardanol und Cardol enthaltende phenolische Blockierungsmittel kann dabei aus Cashewnuss-Schalenöl (CNSL), ein Abfallprodukt beim Anbau von Cashewnüssen, gewonnen werden.

Der Cardanolgehalt in CNSL beträgt mindestens 90 Gew.-%, bezogen auf das Gesamtgewicht, wobei zusätzlich die Nebenkomponenten Cardol, Methylcardol und/oder Anarcadic acid als Nebenkomponenten vorliegen. Das CNSL wird unter thermischer Behandlung wie z.B: Destillation aufgereinigt. Die allgemeine Zusammensetzung des Rohstoffs des Cashewnuss-Schalenöls ist ausführlich beschrieben in WO 2017/207346.

Geeignet sind Zusammensetzung von Cardanol und Cardol in einem Gewichtsverhältnis 92 : 8 bis 100 : 0, bevorzugt 95 : 5 bis 100 : 0, besonders bevorzugt 97 : 3 bis 100 : 0.

Das Blockierungsmittel C enthält zusätzlich mindestens eine Verbindung der allgemeinen Formel (1) in einer Gesamtmenge von 0,1 bis 3,0 Gew.-%, bevorzugt 1,0 bis 3,0 Gew.-%, besonders bevorzugt 1,2 bis 2,8 Gew.-%, jeweils bezogen auf das Gesamtgewicht des Blockierungsmittels .

Gegebenenfalls enthält das Blockierungsmittel C mindestens eine Verbindungen der allgemeinen Formel (2) in einer Gesamtmenge von maximal 1,8 Gew.-%, bevorzugt maximal 1,5 Gew.-%, besonders bevorzugt maximal 0,5 Gew.-%, ganz besonders bevorzugt maximal 0,1 Gew.-%, jeweils bezogen auf das Gesamtgewicht des Blockierungsmittels. Am meisten bevorzugt ist das Blockierungsmittel frei von Verbindungen der Formel (2).

Das Blockierungsmittel C weist bevorzugt eine OH-Zahl von 184 bis 206, besonders bevorzugt von 184 bis 200 und ganz besonders bevorzugt von 186 bis 192 auf.

Die **Blockierungsreaktion** kann mit oder ohne von aus der Polyurethanchemie an sich bekannten **Katalysatoren (D1),** wie beispielsweise metallorganischen Verbindungen wie Zinn(II)-octoat, Dibutylzinn(II)diacetat, Dibutylzinn(II)laurat, 2,3-Dimethyl-3,4,5,6-tetrahydropyrimidin oder tertiären Aminen wie Triethylamin oder Diazabicyclooctan oder 1,8-Diazabicylo[5.4.0]-undec-7-en durchgeführt werden. Bevorzugt wird die Blockierungsreaktion unter Mitverwendung mindestens eines dieser Katalysatoren durchgeführt.

Die Blockierungsreaktion kann unter Verwendung eines geeigneten, gegenüber den reaktiven Gruppen der Ausgangskomponenten inerten Lösemittels erfolgen. Geeignete Lösemittel sind beispielsweise die an sich bekannten üblichen Lacklösemittel, wie z.B. Ethylacetat, Butylacetat, Ethylenglykolmonomethyl- oder ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, hoher substituierte Aromaten, wie sie beispielsweise unter den Bezeichnungen Solventnaphtha, Solvesso, Isopar, Nappar (ExxonMobil Chemical Central Europe, Köln, DE) und Shellsol (Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel. Bevorzugt wird Lösemittel-frei gearbeitet.

Der Gehalt freier NCO-Gruppen in den erfindungsgemäßen blockierten Isocyanat-Prepolymeren ist bevorzugt < 0,5 Gew.-%, besonders bevorzugt < 0,2 Gew.-%, ganz besonders bevorzugt < 0,1 Gew.-%.

Beim erfindungsgemäßen Verfahren wird Komponente B mit überschüssigen Mengen der Isocyanatkomponente A gegebenenfalls in Anwesenheit eines Katalysators D2 umgesetzt. Anschließend wird gegebenenfalls unreagiertes Di- bzw. Polyisocyanat destillativ, z.B. durch Dünnschichtdestillation, wieder entfernt. Bevorzugt liegt das Molverhältnis der OH-Gruppen der Polyetherpolyolkomponente zu der NCO-Gruppen des Di- oder Polyisocyanats zwischen 1:1,5 und 1:20, besonders bevorzugt zwischen 1:1,8 und 1:5 und besonders bevorzugt zwischen 1:1,95 und 1:2,05.

Die Umsetzung von Komponente B und A erfolgt im allgemeinen bei einer Temperatur von 0 bis 250 °C, bevorzugt von 20 bis 140 °C und besonders bevorzugt von 40 bis 100 °C, gegebenenfalls unter Verwendung einer Katalysatorkomponente D2. Als **Katalysatoren für die Prepolymerbildung (D2)** eignen sich beispielsweise die bereits oben für Komponente D1 beschriebenen Katalysatoren. Sofern Komponente A aromatische Diisocyanate oder Polyisocyanaten mit aromatisch gebundenen Isocyanatgruppen umfasst, erfolgt die Prepolymerisierungsreaktion bevorzugt katalysatorfrei.

Sofern für die Prepolymerisierungsreaktion als auch für die Blockierungsreaktion Katalysatoren eingesetzt werden, werden für beide Reaktionen bevorzugt die gleichen Katalysatoren bzw. Katalysatorenmischungen eingesetzt.

Die Prepolymerisierungsreaktion kann unter Verwendung eines Lösemittels erfolgen. Als Lösemittel eignen sich beispielsweise die bereits oben für die Blockierungsreaktion beschriebenen Lösemittel. Bevorzugt wird Lösemittel-frei gearbeitet.

Zur Herstellung der erfindungsgemäßen Produkte, werden die aus Komponente A und Komponente B, gegebenenfalls unter Verwendung von Katalysatorkomponente D2 erhaltenen Isocyanatgruppen-haltigen Prepolymere in einem weiteren Schritt mit dem Blockierungsmittel C bei Temperaturen von 40 bis 100 °C, bevorzugt von 50 bis 90 °C und besonders bevorzugt von 60 bis 80 °C umgesetzt, gegebenenfalls unter Verwendung einer geeigneten Katalysatorkomponente D 1. Die Menge der bei der Blockierungsreaktion eingesetzten Komponente C sollte zumindest 30 Mol-%, bevorzugt 50 Mol-%, besonders bevorzugt mehr als 95 Mol-%, der Menge der zu blockierenden Isocyanatgruppen entsprechen. Ein geringer Überschuss an Blockierungsmittel kann zweckmäßig sein, um ein vollständige Reaktion aller Isocyanatgruppen zu gewährleisten. In der Regel beträgt der Überschuss nicht mehr als 20 Mol-%, bevorzugt nicht mehr als 15 Mol-% und besonders bevorzugt nicht mehr als 10 Mol-%, bezogen auf die zu blockierenden Isocyanatgruppen. Ganz besonders bevorzugt liegt die Menge der bei der Blockierungsreaktion eingesetzten Komponente C daher bei 95 Mol-% bis 110 Mol-%, bezogen auf die Menge der zu blockierenden Isocyanatgruppen des Isocyanat-Prepolymers.

Die Zugabe der Komponenten kann sowohl bei der Herstellung der Isocyanatgruppen-haltigen Prepolymere als auch bei der Blockierung derselben in beliebiger Reihenfolge erfolgen. Bevorzugt ist jedoch die Zugabe des Polyisocyanats A zum vorgelegten Polyetherpolyol B und schließlich die Zugabe der Blockierungs-Komponente C. Dazu wird das Polyetherpolyol B in einem geeigneten Reaktionsgefäß vorgelegt und gegebenenfalls unter Rühren im oben genannten Temperaturbereich (max. 250°C, bevorzugt 20 bis 140 °C und besonders bevorzugt 40 bis 100 °C) erwärmt. Nach Erreichen der gewünschten Temperatur wird dann unter Rühren das Di- oder Polyisocyanat A zugegeben. Zur Beschleunigung der Reaktion kann ein Katalysator D2 zugegeben werden und zwar zu jedem Zeitpunkt vor, während oder nach den vorangehend beschriebenen Schritten. Das Reaktionsgemisch wird nun solange gerührt, bis der theoretische NCO-Gehalt des nach der gewählten Stöchiometrie zu erwartenden Isocyanat-Prepolymers erreicht oder geringfügig unterschritten ist. Das so erhaltene Isocyanat-Prepolymer kann einer destillativen Aufreinigung unterzogen werden.

Für die sich anschließende Blockierungsreaktion wird die Temperatur der Reaktionsmischung auf einen Wert zwischen 40 und 100°C eingestellt. Nach dem Erreichen der gewünschten Temperatur wird das Blockierungsmittel C zugegeben. Zur Beschleunigung der Blockierungsreaktion kann ein geeigneter Katalysator D1, wie z.B. Dibutylzinn(II)dilaurat, zugegeben werden. Dies kann vor oder nach Einstellung der Temperatur und vor oder nach der Zugabe des Blockierungsmittels erfolgen. Die Reaktionsmischung wird dann solange gerührt, bis der Gehalt an freien Isocyanatgruppen kleiner als 0,5 Gew.-%, bevorzugt kleiner als 0,2 Gew.-%, besonders bevorzugt kleiner als 0,1 Gew.-%, ist. Danach wird das Reaktionsgemisch abgekühlt und gegebenenfalls noch mit einem Reaktionsstopper, wie z.B. Benzoylchlorid versehen.

In einer weiteren Ausführungsform des erfindungsgemäßen Verfahrens wird das Di- oder Polyisocyanat A in einem geeigneten Reaktionsgefäß vorgelegt und gegebenenfalls unter Rühren auf 40 bis 100°C erwärmt. Nach Erreichen der gewünschten Temperatur wird unter Rühren dann das Polyetherpolyol B zugegeben. Zur Beschleunigung der Reaktion kann ein Katalysator D2 zugegeben werden und zwar zu jedem Zeitpunkt vor, während oder nach den vorangehend beschriebenen Schritten. Das Reaktionsgemisch wird solange gerührt, bis der theoretische NCO-Gehalt des nach der gewählten Stöchiometrie zu erwartenden Isocyanat-Prepolymers erreicht oder geringfügig unterschritten ist. Die weitere Umsetzung erfolgt dann wie bereits beschrieben.

Ein weiterer Gegenstand der vorliegenden Erfindung sind die vorstehend beschriebenen, blockierten Isocyanat-Prepolymere mit einer Viskosität, gemessen nach DIN EN ISO 3219:1994-10 bei 23 °C, kleiner 40000 mPas, bevorzugt kleiner 35000 mPas, besonders bevorzugt kleiner 30000 mPas.

Darüber hinaus ist ein Gegenstand der Erfindung Reaktivsysteme enthaltend oder bestehend aus
a) mindestens ein/einem erfindungsgemäßes/en, blockiertes/en Isocyanat-Prepolymer
b) mindestens eine/einer organische/n Verbindungen mit mindestens 2 primären Aminogruppen,
c) gegebenenfalls mindestens eine/einer Oxirangruppen-aufweisende/n Verbindung einer durchschnittlichen Oxiranfunktionalität > 1, sowie
d) gegebenenfalls Produkte aus Reaktionen der Komponente a bis c untereinander,
e) gegebenenfalls Katalysatoren und/oder Hilfs- und oder Zusatzstoffe.

Bei den Aminen der Komponente b handelt es sich um Polyamine, die mindestens zwei primäre Aminogruppen pro Molekül und gegebenenfalls noch sekundäre Aminogruppen aufweisen und vorzugsweise ein mittleres Molekulargewicht von 60 bis 500 besitzen. Geeignet sind beispielsweise Ethylendiamin, 1,2- und 1,3-Diaminopropan, 1,4-Diaminobutan, 2,2,4-und/oder 2,4,4-Trimethylhexamethylendiamin, die isomeren Xylolendiamine, 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3' -Dimethyl-4,4'-diaminodicyclohexylmethan, 3-Aminomethyl-3,3,5-trimethylcyclohexylamin (Isophorondiamin), 3(4)-Aminomethyl-1-methylcycloliexylamin, technisches Bisaminomethyltricyclodecan, Octahydro-4.7-methanoinden-1.5-dimethanamin oder auch solche Polyamine, die neben mindestens zwei primären Aminogruppen noch sekundäre Aminogruppen aufweisen wie beispielsweise Diethylentriamin oder Triethylentetramin.

Besonders bevorzugt sind Polyamine, insbesondere Diamine des genannten. Molekulargewichtsbereichs, die einen oder mehrere cycloaliphatische Ringe aufweisen. Hierzu gehören beispielsweise 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3' -Dimethyl-4,4' -diaminodicyclohexylmethan, 3-Aminomethyl-3,3,5-trimethylcyclohexylamin(Isophorondiamin), 3- und 4-Aminomethyl-1-methylcyclohexylamin oder technisches Bisaminomethyltricyclodecan.

Ebenfalls als Bestandteil der Aminkomponente einsetzbar sind Addukte, die durch Umsetzung eines Überschusses der genannten Polyamine mit Epoxidharzen der nachstehend genannten Art hergestellt werden.

Weiterhin in Komponente b einsetzbar sind Polyetheramine, die durch Umsetzung von Polyetherpolyolen mit Ammoniak hergestellt werden und beispielsweise von Huntsman unter dem Handelsnamen Jeffamin^{®} vertrieben werden.

Des Weiteren sind auch Polyamidharze als Bestandteil von Komponente b geeignet. Derartige Polyamidharze, zu denen die Polyaminoamide und die Polyaminoimidazoline gehören, werden u.a. von Henkel KGaA unter dem Handelsnamen "Versamid^{®} " vertrieben.

Selbstverständlich ist es auch möglich Gemische der genannten Polyamine als Aminkomponente b einzusetzen.

Verbindungen der Komponente c sind Oxirangruppen-aufweisende Verbindungen. Geeignete Oxirangruppen-aufweisende Verbindungen sind Epoxidharze, die im Durchschnitt mehr als eine Epoxidgruppe pro Molekül enthalten. Beispiele für geeignete Epoxidharze sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A) Diphenylolmethan (Bisphenol F) oder Phenol-Aldehyd-Kondensaten. Es können auch Glycidylester mehrwertiger Carbonsäuren; wie Hexahydrophtalsäure oder dimerisierte Fettsäure verwendet werden.

Besonders bevorzugt ist der Einsatz von flüssigen Epoxidharzen auf Basis von Epichlorhydrin und Diphenylolpropan-2,2 (Bisphenol A) oder Diphenylolmethan (Bisphenol F) bzw. deren Mischungen. Gewünschtenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In den erfindungsgemäßen, bevorzugt lösemittelfreien, raumtemperaturhärtenden Reaktivsystemen liegen im Allgemeinen pro Epoxidgruppe der Komponente c 0,4 bis 0,9, vorzugsweise 0,5 bis 0,8 primäre Aminogruppen der Komponente b und 0,02 bis 0,6, vorzugsweise 0,03 bis 0,5 blockierte Isocyanatgruppen der Komponente a vor.

Zur Herstellung von gebrauchsfertigen Mischungen können den erfindungsgemäßen Reaktivsystemen die üblichen Katalysatoren, Hilfs- und Zusatzmittel wie beispielsweise Füllstoffe, Lösungsmittel, Verlaufshilfsmittel, Pigmente, Reaktionsbeschleuniger oder Viskositätsregulatoren einverleibt werden. Beispielhaft genannt seien Reaktionsbeschleuniger wie Salicylsäure, Bis-(dimethylamino-methyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol.

Selbstverständlich kann der gebrauchsfertigen Mischung gegebenenfalls bis zu 20 Gew.-%, vorzugsweise bis zu 10 Gew.-%, besonders bevorzugt bis zu 5 Gew.-% eines Lösemittels bzw. Lacklösemittels der zuvor bereits beschriebenen Art für applikationstechnische Zwecke zugefügt werden. Sollte an dieser Stelle Lösemittel eingesetzt werden, kann auch bei einem eventuellen Einsatz von Lösemitteln während der Synthese der erfindungsgemäßen Polyurethan-Prepolymere auf das Entfernen des Lösemittels verzichtet werden.

Ganz besonders bevorzugt im Sinne dieser Erfindung sind allerdings lösemittelfreie gebrauchsfertige Reaktivsysteme.

Die Komponente a wird beim erfindungsgemäßen Verfahren zur Herstellung der Reaktivsysteme in beliebiger Reihenfolge mit der Komponente b vermischt, bevorzugt unter Rühren. Danach können, ebenfalls in beliebiger Reihenfolge und wiederum gegebenenfalls unter Rühren, noch die Komponenten c und d zugegeben werden.

Die Herstellung der erfindungsgemäßen Reaktivsysteme aus a und b und gegebenenfalls c und/oder d erfolgt bevorzugt bei Temperaturen von -20°C bis 50°C, besonders bevorzugt bei 0°C bis 40°C.

Die erfindungsgemäßen Polyisocyanate, wie auch die Reaktivsysteme eignen sich zur Herstellung von Beschichtungen, Klebstoffen, Dichtungsmassen, Vergussmassen oder Formteilen in allen Anwendungsgebieten, wo gute Haftung, Chemikalienfestigkeit, sowie hohe Schlag- und Stoßfestigkeit, verbunden mit guter Flexibilität und Elastizität gefordert werden. Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung zeichnen sich die Systeme durch eine gute Nasshaftung und eine gute Haftung unter Kothodenschutzbedingungen aus.

Ein weiterer Gegenstand der vorliegenden Erfindung ist die Verwendung der blockierten Isocyanat-Prepolymere bei der Herstellung von Polyurethankunststoffen.

Ein weiterer Gegenstand der vorliegenden Erfindung ist darüber hinaus die Verwendung der erfindungsgemäßen Reaktivsysteme zur Herstellung von Beschichtungen, im Besonderen Korrosionsschutzbeschichtungen, Klebstoffen, Dichtungsmassen, Vergussmassen, Primern oder Formteilen.

Ebenso sind Gegenstände der vorliegenden Erfindung Beschichtungen, im Besonderen Korrosionsschutzbeschichtungen, Klebstoffe, Dichtungsmassen, Vergussmassen, Primer und Formteile, enthaltend die blockierten Isocyanat-Prepolymere gemäß vorstehender Beschreibung, sowie Substrate beschichtet mit diesen Beschichtungen, im Besonderen einer solchen Korrosionsschutzbeschichtung.

Die erfindungsgemäßen Reaktivsysteme können auf den unterschiedlichsten Untergründen eingesetzt werden. Als Beispiele seien genannt mineralische Untergründe, z.B. aus Beton und/oder Stein, metallische Untergründe, z.B. aus Eisen, Stahl, Kupfer, Messing, Bronze, Aluminium oder Titan sowie aus Legierungen der genannten Metalle, und Kunststoffe, z.B. in Form bereits bestehender Beschichtungen auf beispielsweise den genannten metallischen oder mineralischen Untergründen.

Darüber hinaus zeigen die erfindungsgemäßen blockierten Isocyanat-Prepolymere eine hervorragende Verträglichkeit mit den Komponenten b und c, da die Reaktion von Epoxidharz/Amin und blockiertem Isocyanat/Amin so eingestellt werden kann, dass die Reaktivsysteme einen verträglichen Blend bei Raumtemperatur ergeben.

Die erfindungsgemäßen Reaktivsysteme können beispielsweise durch Gießen, Streichen, Tauchen, Spritzen, Fluten, Rakeln oder Walzen auf die zu beschichtende Oberfläche applizierte werden. Je nach Anwendungsgebiet können somit Schichtdicken von 10 Pm (z.B. für dünne Korrosionsschutzbeschichtungen) bis zu mehreren Zentimetern (z.B. für rissüberbrückende Vergussmassen) erzielt werden.

Je nach gewählter Zusammensetzung der erfindungsgemäßen Reaktivsysteme, härten diese bei Umgebungsbedingungen, d.h. bei Temperaturen von vorzugsweise -30°C bis 50°C und einer relative Feuchte von vorzugsweise 10 % bis 90 % innerhalb von wenigen Minuten bis zu einigen Tagen. Durch erhöhte Temperaturen, d.h. oberhalb der genannten 50°C, kann die Aushärtung zusätzlich forciert werden, was in der Praxis ebenfalls gewünscht sein kann.

Die vorliegende Erfindung wird im Folgenden anhand von Beispielen und Vergleichsbeispielen näher erläutert, ohne sie jedoch auf diese einzuschränken.

Alle Prozentangaben beziehen sich, soweit nichts anders vermerkt, auf das Gewicht.

Die Zusammensetzung des phenolischen Blockierungsmittels wurde gaschromatographisch bestimmt. Die Messung erfolgte auf einem GC 6890 von Agilent unter Verwendung einer Optima-1-MS-Accent Säule (30 m x 0,25 mm x 0,5 µm) und einem Massenspektrometer-Detektor MSD 5973. Als Trägergas wurde Helium mit einer Flussrate von 3 mL/min eingesetzt. Die Säulentemperatur betrug 80 °C und wurde im Anschluss mit 6 °C/min auf 320 °C erhöht und bei Erreichen der Zieltemperatur für 20 min gehalten. Für die GC/MS Detektion betrug die Ionisierungsenergie 70 eV. Injektionstemperatur betrug 270 °C mit einem Splitverhältnis von 20:1.

Der Schwefelgehalt des phenolischen Blockierungsmittels wurde mittels optischer Emissionsspektrometrie mit induktiv gekoppeltem Plasma (ICP-OES) bestimmt. Dazu wurde die Probe vorerst mittels Mikrowellenaufschluss in Lösung gebracht. Die optische Spektroskopie erfolgte mit einem ICP-OES Gerät der Firma Spectro (Arcos II) gegen zertifizierte Standards. Als Hauptnachweislinie für Schwefel wurde die Linie 180.731 nm verwendet. Um mögliche Interferenzen auszuschließen wurde eine zweite Linie (182,034 nm) mitbeobachtet.

Sämtliche Viskositätsmessungen erfolgten mit einem Physica MCR 51 Rheometer der Fa. Anton Paar Germany GmbH (DE) nach DIN EN ISO 3219: 1994-10 bei einer Scherrate von 250 s⁻¹.

Die Bestimmung der NCO-Gehalte erfolgte titrimetrisch nach DIN EN ISO 11909:2007-05.

Die OH-Zahlen wurden titrimetrisch in Anlehnung an DIN 53240 T.2 bestimmt.

Die Bestimmung der Bruchspannung und -dehnung erfolgte in Anlehnung an DIN EN ISO 527-2:2012-06.

Die Weitereißfestigkeit wurde nach ISO 34-1:2016-06 bestimmt.

Die Härteprüfung nach Shore A und Shore D erfolgte nach DIN 53505:2000-08.

Das Epilox T19-34/700 ist ein flüssiges Epoxidharz auf Basis Bisphenol A und Bisphenol F mit einem Epoxid-Äquivalent von 165-180 und einem entsprechenden Epoxid-Gehalt von 23,9 - 26,1 % (beide Werte nach DIN 16945:1989-03), erhältlich von der Fa. Overlack GmbH, Deutschland. Efka^{®} SI 2008 ist ein Additiv zur Entlüftung und Entschäumung, erhältlich von BASF AG, Ludwigshafen, DE, und TCD Diamin, octahydro-4,7-methano-1H-indenedimethylamine, Oxea, Marl, DE.

### Beispiel 1

a) 908,0 g eines Polyetherpolyols mit der Funktionalität 2 und der OH-Zahl 56, hergestellt durch Propoxylierung von Propylenglykol, wurden mit 158,0 g 2,4-Diisocyanatotoluol/2,6-Diisocyanatotoluol (Verhältnis = 80/20) 3 Stunden bei 90 °C prepolymerisiert bis der theoretische NCO-Gehalt von 3,6 % erreicht war. Anschließend setzte man 324,0 g phenolisches Blockierungsmittel 1 (NX 2026, Handelsprodukt der Firma Cardolite Specialty Chemicals Europe N.V.) der OH Zahl 191 zu, enthaltend Cardanol und Cardol in einem Gew.-Verhältnis von 100 : 0, 1,7 % der Verbindung der allgemeinen Formel (1), 0 % der Verbindung der allgemeinen Formel (2) und einen Schwefel-Gehalt von kleiner 10 ppm, katalysiert mit 1,6 g Zinn(II)octoat, und rührte bei 65 °C bis der NCO-Gehalt unterhalb 0,4 % lag.

Danach gab man 2,1 g Benzoylchlorid zu und rührte 30 Minuten nach.

Das so erhaltene blockierte Isocyanatprepolymer ist durch folgende Kenndaten gekennzeichnet:

| | |
|---|---|
| Viskosität (23 °C) | 27500 mPas |
| Gehalt an freiem NCO | 0,22% |

b) 40 g des blockierten Isocyanat-Prepolymers aus a) wurden mit 40 g Epilox T19-34/700, 0,8 g Ölsäure, 0,4 g Efka^{®} SI 2008, 0,4 g Benzylalkohol gegeben und gerührt, bis eine homogene Mischung entstanden ist. Danach wurde der Härter TCD Diamin zugegeben und nochmals homogen vermischt. Die Mischung wurde in einer Schichtdicke von ca. 1,5 mm ausgegossen. Nach einigen Stunden wurde ein transparenter,
hochelastischer Kunststoff mit folgenden mechanischen Kennwerten erhalten:

| | |
|---|---|
| Bruchspannung: | 15,5 N/mm² |
| Bruchdehnung: | 40,0 % |
| Weitereißfestigkeit: | 51,9 N/mm |
| Shore A: | 95 |
| Shore D: | 63 |

### Beispiele 2 bis 9

Nach dem in Beispiel 1 beschriebenen Verfahren wurden weitere blockierte Isocyanat-Prepolymere unter Verwendung diverser phenolischer Blockierungsmittel hergestellt. Die resultierten Kenndaten der blockierten Isocyanat-Prepolymere und die aus den entsprechenden Reaktivsystemen resultierenden mechanischen Kennwerte sind in der nachfolgenden Tabelle zusammengefasst.

**Tabelle 1: Übersicht der durchgeführten Beispiele 1 bis 9:**

| | **Beispiel** | **Erfindungsgemäß** | | | | | | | **Vergleich** | |
|---|---|---|---|---|---|---|---|---|---|---|
| | | **1** | **2** | **3** | **4** | **5** | **6** | **7** | **8** | **9** |
| **Blockierungsmittel:** | | | | | | | | | | |
| NX-2026 (Cardolite Specialty Chemicals Europe N.V) | | x | x | x | x | | | | | |
| NX-2025 (Cardolite Specialty Chemicals Europe N.V) | | | | | | x | x | | | |
| GP-502 (Golden Cashew Products Pvt. Ltd) | | | | | | | | x | | |
| Cardanol (Klaus F. Meyer GmbH) | | | | | | | | | x | x |
| Cardanol : Cardol | | 100 : 0 | 100 : 0 | 100 : 0 | 100 : 0 | 97 : 3 | 98 : 2 | 95 : 5 | 90 : 10 | 89 : 11 |
| Verbindung 1 [%] | | 1,7 | 1,1 | 1,2 | 1,2 | 2,8 | 2,6 | 2,1 | 2,8 | 2,8 |
| Verbindung 2 [%] | | 0,0 | 0,0 | 0,1 | 0,0 | 1,8 | 1,5 | 0,8 | 1,9 | 2,1 |
| OHZ | | 191 | 191 | 189 | 189 | 200 | 194 | 198 | 209 | 215 |
| Schwefel [mg/kg] | | < 12 | < 12 | < 12 | < 12 | < 12 | < 12 | < 12 | 18 | 31 |

| **Blockiertes Isocyanat-Prepolymer:** | | | | | | | | | | |
|---|---|---|---|---|---|---|---|---|---|---|
| Viskosität [mPas] | | 27500 | 30300 | 26000 | 24100 | 25800 | 27300 | 33500 | 43000 | 52700 |
| Gehalt an freiem NCO [%] | | 0,22 | 0,29 | 0,27 | 0,25 | 0,27 | 0,35 | 0,24 | 0,33 | 0,27 |

| **Reaktivsystem:** | | | | | | | | | | |
|---|---|---|---|---|---|---|---|---|---|---|
| Bruchspannung [N/mm²] | | 15,5 | 20,2 | 20,7 | 18,3 | 16,8 | 19,7 | 19,7 | 20,6 | 21,9 |
| Bruchdehnung [%] | | 40 | 23,2 | 33,5 | 26,8 | 19,4 | 29,5 | 22,8 | 25,1 | 29,6 |
| Weitereißfestigkeit [N/mm] | | 51,9 | 69,0 | 66,0 | 64,7 | 63,9 | 53,2 | 68,9 | 70,5 | 64,3 |
| Shore A | | 95 | 93 | 93 | 98 | 97 | 95 | 92 | 94 | 89 |
| Shore D | | 63 | 65 | 57 | 58 | 57 | 58 | 52 | 56 | 57 |

## Patentansprüche

1. Blockierungsmittel, enthaltend oder bestehend aus
Cardanol und Cardol in einem Gewichtsverhältnis von 92 : 8 bis 100 : 0,
sowie mindestens eine/r Verbindung der allgemeinen Formel 1 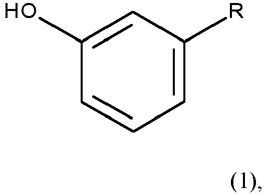
in welcher R für C₁₇H₃₃₋ₙmit n = 0, 2 oder 4 steht,
wobei die Verbindungen der Formel 1 in einer Gesamtmenge von 0,1 bis 3,0 Gew.-
%, bevorzugt 1,0 bis 3,0 Gew.-%, besonders bevorzugt 1,2 bis 2,8 Gew.-%, bezogen auf das Gesamtgewicht des Blockierungsmittels und bestimmt nach dem in der Beschreibung angegebenen Verfahren, vorliegen,
und
gegebenenfalls mindestens eine/r Verbindung der allgemeinen Formel 2 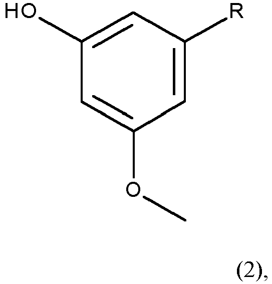
in welchen R für C₁₅H₃₁₋ₙ, mit n = 4 oder 6 steht,
wobei die Verbindungen der Formel 2, falls vorhanden, in einer Gesamtmenge von maximal 1,8 Gew.-%, bevorzugt maximal 1,5 Gew.-%, besonders bevorzugt maximal 0,5 Gew.-%, ganz besonders bevorzugt maximal 0,1 Gew.-%, bezogen auf das Gesamtgewicht des Blockierungsmittels und bestimmt nach dem in der Beschreibung angegebenen Verfahren, vorliegen.

2. Blockierungsmittel gemäß Anspruch 1, wobei das Blockierungsmittel eine OH-Zahl von 184 bis 206, besonders bevorzugt von 184 bis 200 und ganz besonders bevorzugt von 186 bis 192, bestimmt nach dem in der Beschreibung angegebenen Verfahren, aufweist.

3. Blockierungsmittel gemäß Anspruch 1 oder 2 mit einem Schwefelgehalt von weniger als 15 mg/kg, bevorzugt von weniger als 12 mg/kg, bestimmt nach dem in der Beschreibung angegebenen Verfahren.

4. Verfahren zur Herstellung von blockierten Isocyanat-Prepolymeren, umfassend die oder bestehend aus der Umsetzung von
mindestens einem Isocyanat-Gruppen tragenden Prepolymeren, erhältlich aus der Umsetzung einer Zusammensetzung, umfassend oder bestehend aus
A. mindestens ein/einem aliphatisches/en, cycloaliphatisches/en, araliphatisches/en und/oder aromatisches/en Di- und/oder Polyisocyanat und
B. mindestens eine/einer Polyhydroxyverbindung
mit
einem Blockierungsmittel C gemäß einem der Ansprüche 1 bis 3.

5. Verfahren gemäß Anspruch 4, wobei als Komponente A mindestens ein Di- und/oder Polyisocyanat auf Basis von 1,5-Naphthalendiisocyanat (NDI), Diisocyanatodiphenylmethan (MDI), Poly(methylenphenylisocyanat) (pMDI), Diisocyanatomethylbenzol (2,4- und 2,6-Toluylendiisocyanat, TDI) eingesetzt wird.

6. Verfahren gemäß Anspruch 4 oder 5, wobei als Komponente B mindestens eine Polyhydroxyvebindung, bevorzugt mindestens ein Poyetherpolyol, mit einer OH-Funktionalität von 1,8 bis 6,0 und einem zahlenmittleren Molekulargewicht von 1.000 g/mol bis 10.000 g/mol, bestimmt nach dem in der Beschreibung angegebenen Verfahren, eingesetzt wird.

7. Verfahren gemäß einem der Ansprüche 4 bis 6, wobei als Komponente B mindestens ein Polyetherpolyol eingesetzt wird, welches ein Anlagerungsprodukt von Ethylenoxid und/oder Propylenoxid an 1,2-Propandiol (Propylenglykol), 1,3-Propandiol, Glycerin, Trimethylolpropan, Ethylendiamin und/oder Pentaerythrit ist, oder welches ein durch Polymerisation von Tetrahydrofuran erhältliches Polytetramethylenetherglykol ist.

8. Verfahren gemäß einem der Ansprüche 4 bis 7, wobei das mindestens eine Isocyanat-Gruppen tragende Prepolymer, welches erhältlich ist aus der Umsetzung der Zusammensetzung, umfassend oder bestehend aus den Komponenten A und B, vor der Umsetzung mit Komponente C destillativ von unreagiertem Di- und oder Polyisocanat der Komponente A zumindest teilweise befreit wird.

9. Verfahren gemäß einem der Ansprüche 4 bis 8, wobei die Umsetzung der Zusammensetzung, umfassend oder bestehend aus den Komponenten A und B, mit Komponente C in Gegenwart eines Katalysators D1 erfolgt.

10. Blockierte Isocyanat-Prepolymere erhältlich nach einem Verfahren gemäß einem der Ansprüche 4 bis 9.

11. Blockierte Isocyanat-Prepolymere gemäß Anspruch 10 mit einer Viskosität, gemessen nach DIN EN ISO 3219:1994-10 bei 23 °C, kleiner 40000 mPas, bevorzugt kleiner 35000 mPas, besonders bevorzugt kleiner 30000 mPas.

12. Reaktivsysteme enthaltend oder bestehend aus
a) mindestens ein/einem erfindungsgemäßes/en, blockiertes/en Isocyanat-Prepolymer gemäß einem der Ansprüche 10 oder 11,
b) mindestens eine/einer organische/n Verbindungen mit mindestens 2 primären Aminogruppen,
c) gegebenenfalls mindestens eine/einer Oxirangruppen-aufweisende/n Verbindung einer durchschnittlichen Oxiranfunktionalität > 1, sowie
d) gegebenenfalls Produkte aus Reaktionen der Komponente a bis c untereinander,
e) gegebenenfalls Katalysatoren, Hilfs- und Zusatzmittel.

13. Verwendung der blockierten Isocyanat-Prepolymere gemäß Anspruch 10 oder 11 bei der Herstellung von Polyurethankunststoffen.

14. Verwendung der Reaktivsysteme gemäß Anspruch 12 zur Herstellung von Beschichtungen, im Besonderen Korrosionsschutzbeschichtungen, von Klebstoffen, Dichtungsmassen, Vergussmassen, Primern oder Formteilen.

15. Beschichtungen, im Besonderen Korrosionsschutzbeschichtungen, Klebstoffe, Dichtungsmassen, Vergussmassen, Primer und Formteile, enthaltend die blockierten Isocyanat-Prepolymere gemäß Anspruch 10 oder 11, sowie Substrate beschichtet mit Beschichtungen, im Besonderen einer solchen Korrosionsschutzbeschichtung, enthaltend die blockierten Isocyanat-Prepolymere gemäß Anspruch 10 oder 11.

## Claims

1. Blocking agent comprising or consisting of
cardanol and cardol in a weight ratio of 92:8 to 100:0
and at least one compound of general formula 1 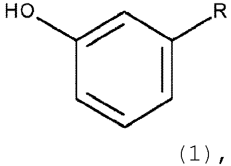 in which R is C₁₇H₃₃₋ₙ, where n = 0, 2 or 4,
the compounds of formula 1 being present in a total amount of 0.1% to 3.0% by weight, preferably 1.0% to 3.0% by weight, more preferably 1.2% to 2.8% by weight, based on the total weight of the blocking agent and determined by the method indicated in the description,
and
optionally at least one compound of general formula 2 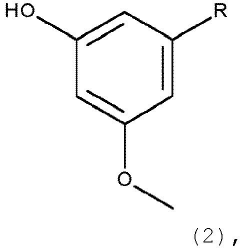
in which R is C₁₅H₃₁₋ₙ, where n = 4 or 6,
the compounds of formula 2, if present, being present in
a total amount of not more than 1.8% by weight, preferably not more than 1.5% by weight, particularly preferably not more than 0.5% by weight, very particularly preferably not more than 0.1% by weight, based on the total weight of the blocking agent and determined by the method indicated in the description.

2. Blocking agent according to Claim 1, wherein the blocking agent has an OH value of from 184 to 206, particularly preferably from 184 to 200 and very particularly preferably from 186 to 192, determined by the method indicated in the description.

3. Blocking agent according to Claim 1 or 2 having a sulfur content of less than 15 mg/kg, preferably of less than 12 mg/kg, determined by the method indicated in the description.

4. Process for producing blocked isocyanate prepolymers, comprising or consisting of the reaction of at least one prepolymer bearing isocyanate groups
obtainable from the reaction of a composition comprising or consisting of
A. at least one aliphatic, cycloaliphatic, araliphatic and/or aromatic di- and/or polyisocyanate and
B. at least one polyhydroxy compound with
a blocking agent C according to any of Claims 1 to 3.

5. Process according to Claim 4, wherein at least one di- and/or polyisocyanate based on naphthalene 1,5-diisocyanate (NDI), diisocyanatodiphenylmethane (MDI), poly(methylene phenyl isocyanate) (pMDI), diisocyanatomethylbenzene (tolylene 2,4- and 2,6-diisocyanate, TDI) is used as component A.

6. Process according to Claim 4 or 5, wherein at least one polyhydroxy compound, preferably at least one polyether polyol, having an OH functionality of 1.8 to 6.0 and a number-average molecular weight of from 1000 g/mol to 10 000 g/mol, determined by the method indicated in the description, is used as component B.

7. Process according to any of Claims 4 to 6, wherein at least one polyether polyol that is a product of the addition of ethylene oxide and/or propylene oxide to propane-1,2-diol (propylene glycol), propane-1,3-diol, glycerol, trimethylolpropane, ethylenediamine and/or pentaerythritol, or that is a polytetramethylene ether glycol obtainable by polymerizing tetrahydrofuran, is used as component B.

8. Process according to any of Claims 4 to 7, wherein the at least one prepolymer bearing isocyanate groups obtainable from the reaction of the composition comprising or consisting of components A and B is, before reaction with component C, at least partially freed, by distillation, of unreacted di- and/or polyisocyanate of component A.

9. Process according to any of Claims 4 to 8, wherein the reaction of the composition comprising or consisting of components A and B with component C takes place in the presence of a catalyst D1.

10. Blocked isocyanate prepolymer obtainable by a process according to any of Claims 4 to 9.

11. Blocked isocyanate prepolymer according to Claim 10 having a viscosity, measured to DIN EN ISO 3219:1994-10 at 23°C, of less than 40 000 mPa·s, preferably less than 35 000 mPa·s, more preferably less than 30 000 mPa·s.

12. Reactive system comprising or consisting of
a) at least one blocked isocyanate prepolymer according to the invention according to either of Claims 10 and 11,
b) at least one organic compound having at least 2 primary amino groups,
c) optionally at least one compound having oxirane groups and an average oxirane functionality of > 1, and
d) optionally products from reactions of components a to c with one another,
e) optionally catalysts, auxiliaries and additives.

13. Use of the blocked isocyanate prepolymer according to Claim 10 or 11 for the production of polyurethane plastics.

14. Use of the reactive system according to Claim 12 for the production of coatings, in particular anti-corrosion coatings, adhesives, sealing compounds, potting compounds, primers or mouldings.

15. Coatings, in particular anti-corrosion coatings, adhesives, sealing compounds, potting compounds, primers and mouldings comprising the blocked isocyanate prepolymer according to Claim 10 or 11 and also substrates coated with coatings, especially with an anti-corrosion coating of this kind, comprising the blocked isocyanate prepolymer according to Claim 10 or 11.

## Revendications

1. Agent bloquant, contenant, ou en étant constitué,
du cardanol et du cardol selon un rapport en poids de 92:8 à 100:0,
ainsi qu'au moins un composé de Formule générale 1 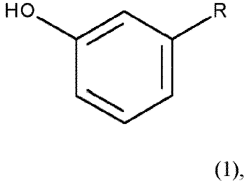
dans laquelle R représente C₁₇H₃₃₋ₙ, avec n = 0, 2 ou 4,
les composés de Formule 1 étant présents en une quantité totale de 0,1 à 3,0 % en poids, de préférence de 1,0 à 3,0 % en poids, d'une manière particulièrement préférée de 1,2 à 2,8 % en poids par rapport au poids total de l'agent bloquant, et déterminée par le procédé indiqué dans la description,
et
éventuellement au moins un composé de Formule générale 2 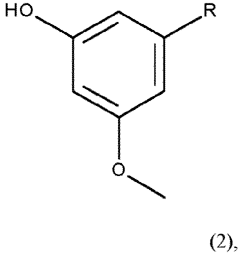
dans laquelle R représente C₁₅H₃₁₋ₙ, avec n = 4 ou 6,
les composés de Formule 2, s'ils sont présents, l'étant en une quantité totale au maximum de 1,8 % en poids, de préférence au maximum de 1,5 % en poids, d'une manière particulièrement préférée au maximum de 0,5 % en poids, d'une manière tout particulièrement préférée au maximum 0,1 % en poids, par rapport au poids total de l'agent bloquant, et déterminée par le procédé indiqué dans la description.

2. Agent bloquant selon la revendication 1, l'agent bloquant présentant un indice d'OH de 184 à 206, d'une manière particulièrement préférée de 184 à 200 et d'une manière tout particulièrement préférée de 186 à 192, déterminé par le procédé indiqué dans la description.

3. Agent bloquant selon la revendication 1 ou 2, ayant une teneur en soufre inférieure à 15 mg/kg, de préférence inférieure à 12 mg/kg, déterminée par le procédé indiqué dans la description.

4. Procédé de fabrication de prépolymères d'isocyanate bloqués, comprenant, ou en étant constitué, la réaction de
au moins un prépolymère portant des groupes isocyanate, pouvant être obtenu par la réaction d'une composition comprenant, ou en étant constitué,
A. au moins un di- et/ou un polyisocyanate aliphatique, cycloaliphatique, araliphatique et/ou aromatique et
B. au moins un composé polyhydroxylé avec
un agent bloquant C selon l'une des revendications 1 à 3.

5. Procédé selon la revendication 4, dans lequel on utilise en tant que composant A au moins un di- et/ou un polyisocyanate à base de diisocyanate de 1,5-naphtalène (NDI), de diisocyanatodiphénylméthane (MDI), de poly(isocyanate de méthylènephényle) (pMDI), de diisocyanatométhylbenzène (diisocyanate de 2,4- et de 2,6-toluylène, TDI).

6. Procédé selon la revendication 4 ou 5, dans lequel on utilise comme composant B au moins un composé polyhydroxylé, de préférence au moins un polyétherpolyol, ayant une fonctionnalité OH de 1,8 à 6,0 et une masse moléculaire moyenne en nombre de 1 000 g/mol à 10 000 g/mol, déterminée par le procédé indiqué dans la description.

7. Procédé selon l'une des revendications 4 à 6, dans lequel on utilise comme composant B au moins un polyétherpolyol, qui est un produit d'addition d'oxyde d'éthylène et/ou d'oxyde de propylène sur du 1,2-propanediol (propylèneglycol), du 1,3-propanediol, du glycérol, du triméthylolpropane, de l'éthylènediamine et/ou du pentaérythritol, ou qui est un polytétraméthylèneétherglycol pouvant être obtenu par polymérisation de tétrahydrofurane.

8. Procédé selon l'une des revendications 4 à 7, dans lequel l'au moins un prépolymère portant des groupes isocyanate, qui peut être obtenu par la réaction de la composition, comprenant, ou en étant constituée, les composants A et B, est débarrassé au moins partiellement du composé A, par distillation, avant la réaction avec le composant C, du di- et/ou du polyisocyanate n'ayant pas réagi.

9. Procédé selon l'une des revendications 4 à 8, dans lequel la réaction de la composition comprenant, ou en étant constituée, les composants A et B, a lieu avec le composant C en présence d'un catalyseur D1.

10. Prépolymères d'isocyanate bloqués pouvant être obtenus par un procédé selon l'une des revendications 4 à 9.

11. Prépolymères d'isocyanate bloqués selon la revendication 10, ayant une viscosité, mesurée selon DIN EN ISO 3219:1994-10 à 23 °C, inférieure à 40 000 mPa.s, de préférence inférieure à 35 000 mPa.s, d'une manière particulièrement préférée inférieure à 30 000 mPa.s.

12. Systèmes réactifs contenant, ou en étant constitués
a) au moins un prépolymère d'isocyanate bloqué, selon l'invention, selon l'une des revendications 10 ou 11,
b) au moins un composé organique ayant au moins 2 groupes amino primaires,
c) éventuellement au moins un composé comportant des groupes oxirane ayant une fonctionnalité oxirane moyenne > 1, ainsi que
d) éventuellement des produits de réactions des composants a à c les uns avec les autres,
e) éventuellement des catalyseurs, des adjuvants et des additifs.

13. Utilisation des prépolymères d'isocyanate bloqués selon la revendication 10 ou 11 pour la fabrication de plastiques de polyuréthane.

14. Utilisation des systèmes réactifs selon la revendication 12 pour fabriquer des revêtements, en particulier des revêtements anticorrosion, d'adhésifs, de masses d'étanchéité, de masses de scellement, de primaires ou d'objets moulés.

15. Revêtements, en particulier revêtements anticorrosion, adhésifs, masses d'étanchéité, masses de scellement, primaires et objets moulés, contenant les prépolymères d'isocyanate bloqués selon la revendication 10 ou 11, ainsi que des substrats revêtus de revêtements, en particulier d'un tel revêtement anticorrosion, contenant les prépolymères d'isocyanate bloqués selon la revendication 10 ou 11.
